# EUROPEAN PATENT SPECIFICATION

(11) **EP 4 358 267 B1**
(45) Date of publication and mention of the grant of the patent: **25.02.2026**
(21) Application number: 23199857.6
(22) Date of filing: 26.09.2023
(51) Int. Cl.: H01M 50/367, H01M 50/209

(54) **BATTERY MODULE**
BATTERIEMODUL
MODULE DE BATTERIE

(30) Priority: 20.10.2022 JP 2022168078
(43) Date of publication of application: 24.04.2024
(73) Proprietor: Prime Planet Energy & Solutions, Inc., Tokyo 103-0022 (JP)
(72) Inventor: YOSHIMURA, Yutaro, Tokyo, 103-0022 (JP); SUZUKI, Yuzo, Tokyo, 103-0022 (JP); ABE, Kosyo, Tokyo, 103-0022 (JP); TAKEDA, Takahide, Tokyo, 103-0022 (JP)
(74) Representative: Kuhnen & Wacker Patent- und Rechtsanwaltsbüro PartG mbB

(56) References cited:
- JP-A- 2010 086 773
- JP-A- 2021 192 356
- US-A1- 2018 151 859
- US-B2- 10 622 609

## Description

### BACKGROUND OF THE INVENTION

### Field of the Invention

The present invention relates to a battery module.

### Description of the Background Art

For example, WO 2014/024434 A1 discloses a power supply device including: a battery stack in which a plurality of battery cells are stacked with a spacer being interposed therebetween; and a gas duct disposed on an upper surface of the battery stack. A battery module according to the preamble of claim 1 may be taken from JP 2021-192356 A. A further battery module is disclosed by 2010-086773 A.

### SUMMARY OF THE INVENTION

As disclosed in WO 2014/024434 A1, there has been known a battery module including: a plurality of stacked battery cells; and a duct through which gas discharged from each battery cell flows, the duct extending in a stacking direction of the battery cells. When the battery module is mounted on, for example, a vehicle such as a battery electric vehicle, it is considered that an excessive impact may be applied to the battery module from outside, so that it is required to improve impact resistance of the battery module.

Thus, it is an object of the present invention to solve the above-mentioned problem and to provide a battery module excellent in impact resistance when an excessive impact is applied thereto from outside.
[1] A battery module comprising: a plurality of battery cell units arranged side by side in a first direction, wherein each of the battery cell units includes a plurality of battery cells stacked in the first direction, the plurality of the battery cells being arranged side by side continuously in the first direction; a duct extending in the first direction with the duct facing the plurality of battery cells in a second direction orthogonal to the first direction, so as to form a flow space for gas discharged from each of the plurality of battery cells; and an attachment-target member to which the duct is attached, the attachment-target member being held by the battery cells, wherein the attachment-target member has a first wall portion disposed in parallel with a plane orthogonal to the second direction, and a pair of second wall portions each rising from the first wall portion in the second direction, the pair of second wall portions being provided with a space being interposed between the pair of second wall portions in a third direction orthogonal to the first direction and the second direction, the duct is disposed between the pair of second wall portions, and the duct has a third wall portion disposed in parallel with the plane orthogonal to the second direction, the third wall portion facing the first wall portion in the second direction with the flow space being interposed between the third wall portion and the first wall portion, and a pair of fourth wall portions extending, in the second direction toward the first wall portion, from both end portions of the third wall portion in the third direction, the pair of fourth wall portions respectively facing the pair of second wall portions in the third direction. Each second wall portion has a wall shape having a thickness in the third direction and extending in the first direction with a height in the second direction greater than the thickness. The battery module further has a case body that accommodates the plurality of the battery cells arranged side by side continuously in the first direction and the attachment-target member is constituted of a plurality of the case bodies.
   According to the battery module thus configured, since the first wall portion and the pair of second wall portions of the attachment-target member are combined with the third wall portion and the pair of fourth wall portions of the duct, a beam structure can be formed in the duct and the attachment-target member so as to face the plurality of battery cells in the second direction and extend in the first direction. Thus, impact resistance of the battery module when an excessive impact is applied thereto from outside can be improved. Moreover, according to the battery module thus configured, the impact resistance of the battery module can be improved by the beam structure formed by the duct and the plurality of case bodies
[2] The battery module according to [1], wherein the duct extends in the first direction to pass over a center position of each of the battery cells in the third direction.
   According to the battery module thus configured, impacts from both sides in the third direction can be received in an excellently balanced manner by the beam structure formed by the duct and the attachment-target member.
[3] The battery module according to [1] or [2], wherein each of the third wall portion and the pair of fourth wall portions has a thickness of 2 mm or more.
   According to the battery module thus configured, rigidity of the beam structure formed by the duct and the attachment-target member can be increased.
[4] The battery module according to any one of [1] to [3], wherein the duct further has a pair of fifth wall portions disposed in parallel with a plane orthogonal to the first direction, the pair of fifth wall portions being provided with a space being interposed between the pair of fifth wall portions in the first direction, the pair of fifth wall portions being connected to both end portions of the third wall portion and both end portions of each of the pair of fourth wall portions in the first direction.
   According to the battery module thus configured, rigidity of the beam structure formed by the duct and the attachment-target member can be increased.
[5] The battery module according to any one of [1] to [4], wherein the third wall portion and the pair of fourth wall portions are provided to extend across the plurality of battery cells stacked in the first direction.

According to the battery module thus configured, when an impact is applied to the battery module from the outside, the battery cells can be prevented by the duct from jumping out in the second direction.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a battery module according to an embodiment of the present invention.
Fig. 2 is an exploded assembly diagram showing the battery module in Fig. 1.
Fig. 3 is a perspective view showing an internal structure of the battery module in Fig. 1.
Fig. 4 is another perspective view showing the internal structure of the battery module in Fig. 1.
Fig. 5 is a perspective view showing a battery cell unit included in the battery module in Fig. 1.
Fig. 6 is a perspective view showing a battery cell included in the battery cell unit in Fig. 1.
Fig. 7 is a perspective view showing a duct.
Fig. 8 is another perspective view showing the duct.
Fig. 9 is a cross sectional view showing the battery module (state in which the duct is attached to an attachment-target member) when viewed in a direction of arrow on a line IX-IX in Fig. 2.
Fig. 10 is a cross sectional view showing the battery module (state in which the duct is attached to the attachment-target member) when viewed in a direction of arrow on a line X-X in Fig. 2.
Fig. 11 is a cross sectional view showing the battery module (state in which the duct is attached to the attachment-target member) when viewed in a direction of arrow on a line XI-XI in Fig. 2.
Fig. 12 is a side view showing a first step when attaching the duct to the attachment-target member.
Fig. 13 is a side view showing a second step when attaching the duct to the attachment-target member.
Fig. 14 is a perspective view showing the battery module when viewed in a direction indicated by an arrow XIV in Fig. 3.

### DESCRIPTION OF THE PREFERRED EMBODIMENTS

Embodiments of the present invention will be described with reference to figures. It should be noted that in the figures referred to below, the same or corresponding members are denoted by the same reference characters.

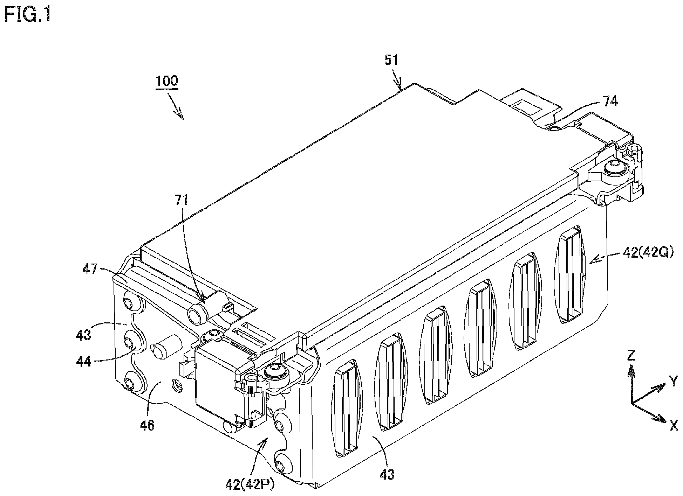

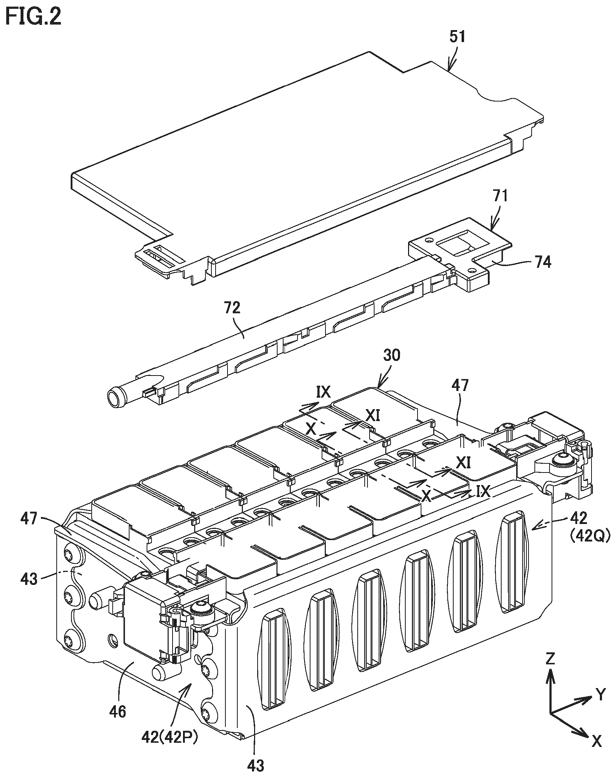

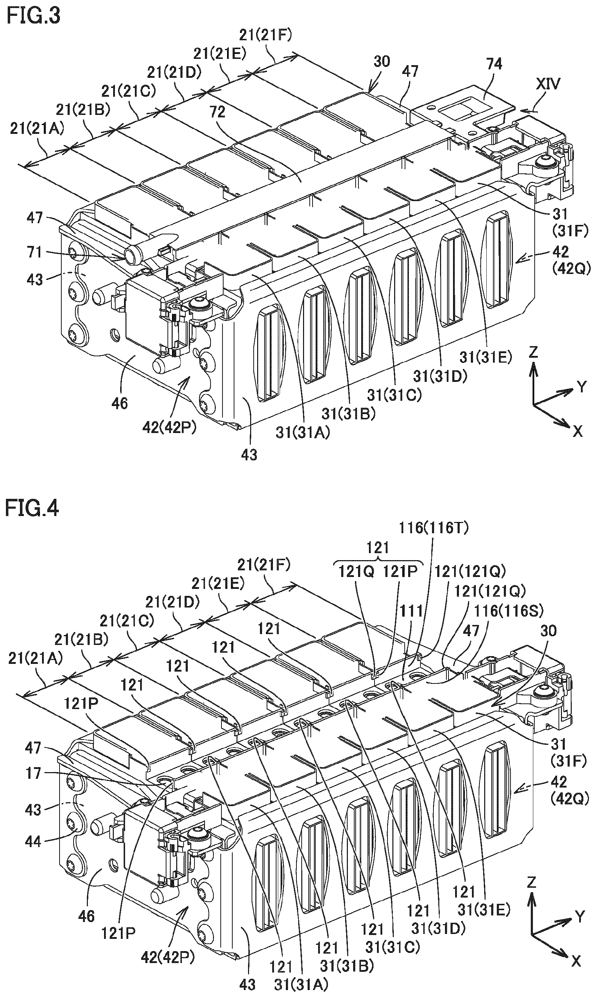

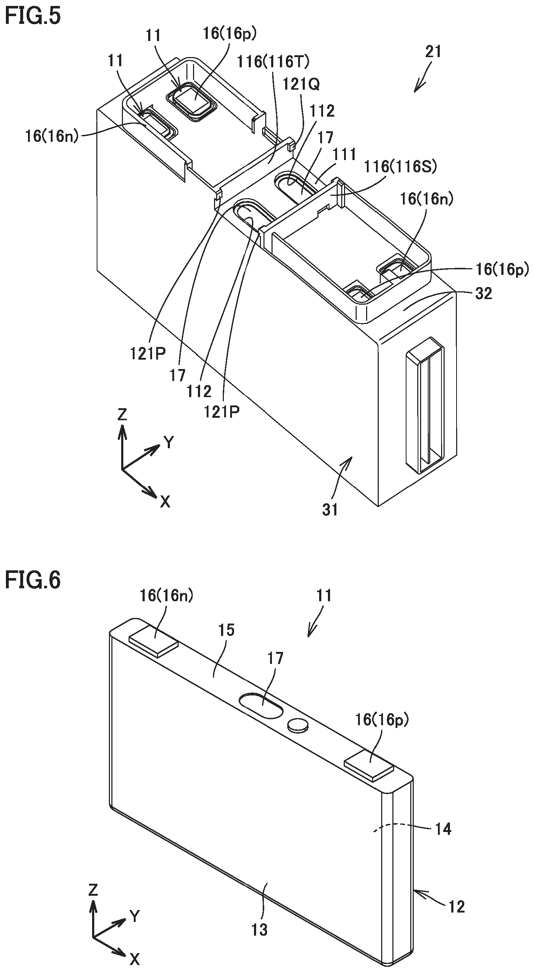

Fig. 1 is a perspective view showing a battery module according to an embodiment of the present invention. Fig. 2 is an exploded assembly diagram showing the battery module in Fig. 1. Each of Figs. 3 and 4 is a perspective view showing an internal structure of the battery module in Fig. 1. Fig. 5 is a perspective view showing a battery cell unit included in the battery module in Fig. 1. Fig. 6 is a perspective view showing the battery cell included in the battery cell unit in Fig. 1.

Referring to Figs. 1 to 6, a battery module 100 is used as a power supply for driving a vehicle such as a hybrid electric vehicle (HEV), a plug-in hybrid electric vehicle (PHEV), or a battery electric vehicle (BEV).

In the present specification, for convenience of description of the structure of battery module 100, the "Y axis" represents an axis extending in parallel with a stacking direction of a plurality of below-described battery cells 11, the "X axis" represents an axis extending in a direction orthogonal to the Y axis, and the "Z axis" represents an axis extending in a direction orthogonal to the Y axis and the X axis. An obliquely rightward upward direction in the plane of sheet of Fig. 1 is "+Y axis direction", and an obliquely leftward downward direction in the plane of sheet of Fig. 1 is "-Y axis direction". An obliquely rightward downward direction in the plane of sheet of Fig. 1 is "+X axis direction" and an obliquely leftward upward direction in the plane of sheet of Fig. 1 is "-X axis direction". An upward direction in the plane of sheet of Fig. 1 is "+Z axis direction" and a downward direction in the plane of sheet of Fig. 1 is "-Z axis direction". Typically, battery module 100 is mounted on a vehicle in such a posture that the +Z axis direction corresponds to the upward direction and the -Z axis direction corresponds to the downward direction.

First, an overall structure of battery module 100 will be described. As shown in Figs. 3 and 4, battery module 100 has a plurality of battery cell units 21 (21A, 21B, 21C, 21D, 21E, 21F).

The plurality of battery cell units 21 are arranged side by side in the Y axis direction. Battery cell unit 21A, battery cell unit 21B, battery cell unit 21C, battery cell unit 21D, battery cell unit 21E, and battery cell unit 21F are arranged side by side in this order from the negative side to the positive side in the Y axis direction. It should be noted that the number of battery cell units 21 included in battery module 100 is not particularly limited as long as two or more battery cell units 21 are included.

As shown in Figs. 5 and 6, each of battery cell units 21, i.e., each of battery cell units 21A to 21F includes a plurality of battery cells 11 and a case body 31.

In each battery cell unit 21, two battery cells 11 are arranged side by side continuously in the Y axis direction. It should be noted that the number of battery cells 11 included in each battery cell unit 21 is not particularly limited as long as a plurality of battery cells 11 are included.

Each of battery cells 11 is a lithium ion battery. Battery cell 11 has an output density of 8000 W/L or more. Battery cell 11 has a prismatic shape and has a thin plate shape in the form of a rectangular parallelepiped. The plurality of battery cells 11 are stacked such that the Y axis direction corresponds to the thickness direction of each battery cell 11.

Each of battery cells 11 has an exterior package 12. Exterior package 12 is constituted of a housing having a rectangular parallelepiped shape, and forms the external appearance of battery cell 11. An electrode assembly and an electrolyte solution are accommodated in exterior package 12.

Exterior package 12 has a cell side surface 13, a cell side surface 14, and a cell top surface 15. Each of cell side surface 13 and cell side surface 14 is constituted of a flat surface orthogonal to the Y axis direction. Cell side surface 13 and cell side surface 14 are oriented oppositely in the Y axis direction. Each of cell side surface 13 and cell side surface 14 has the largest area among the areas of the plurality of side surfaces of exterior package 12. Cell top surface 15 is constituted of a flat surface orthogonal to the Z axis direction. Cell top surface 15 is oriented in the +Z axis direction.

Battery cell 11 further has a gas-discharge valve 17. Gas-discharge valve 17 is provided in cell top surface 15. Gas-discharge valve 17 is provided at the center portion of cell top surface 15 in the X axis direction. When internal pressure of exterior package 12 becomes more than or equal to a predetermined value due to gas generated inside exterior package 12, gas-discharge valve 17 discharges the gas to the outside of exterior package 12. The gas from gas-discharge valve 17 flows through a below-described duct 71 and is discharged to the outside of battery module 100.

Battery cell 11 further has electrode terminals 16 that are a pair of a positive electrode terminal 16p and a negative electrode terminal 16n. Electrode terminals 16 are provided on cell top surface 15. Positive electrode terminal 16p and negative electrode terminal 16n are provided on both sides with gas-discharge valve 17 being interposed therebetween in the X axis direction.

Case body 31 has a rectangular parallelepiped appearance. Case body 31 is composed of a resin. In each battery cell unit 21, case body 31 accommodates a plurality of battery cells 11. Case body 31 has a case top portion 32. Case top portion 32 has a wall shape having a thickness direction corresponding to the Z axis direction with case top portion 32 being disposed in parallel with the X-Y axes plane.

As shown in Figs. 3 and 4, the plurality of battery cells 11 are stacked in the Y axis direction across battery cell units 21A to 21F arranged side by side in the Y axis direction. The plurality of battery cells 11 are stacked such that cell side surfaces 13 of battery cells 11 adjacent to each other in the Y axis direction face each other and cell side surfaces 14 of battery cells 11 adjacent to each other in the Y axis direction face each other. Thus, positive electrode terminals 16p and negative electrode terminals 16n are alternately arranged in the Y axis direction in which the plurality of battery cells 11 are stacked. Positive electrode terminal 16p and negative electrode terminal 16n adjacent to each other in the Y axis direction are connected to each other by a bus bar (not shown) disposed in case top portion 32. Thus, the plurality of battery cells 11 are electrically connected together in series.

As shown in Figs. 1 to 4, battery module 100 further has a pair of end plates 42 (42P, 42Q) and a pair of binding bars 43. The pair of binding bars 43 and the pair of end plates 42 collectively hold the plurality of battery cell units 21 (the plurality of battery cells 11) arranged side by side in the Y axis direction.

The pair of end plates 42 are disposed at both ends beside the plurality of battery cells 11 (the plurality of battery cell units 21) in the Y axis direction. End plate 42P faces battery cell unit 21A in the Y axis direction, and end plate 42Q faces battery cell unit 21F in the Y axis direction.

Each of end plates 42 has a plate portion 46 and a roof portion 47. Plate portion 46 has a plate shape having a thickness direction corresponding to the Y axis direction. Roof portion 47 extends, from an end portion (upper end portion) of plate portion 46 in the +Z axis direction, in a direction away from the stack of battery cells 11 in the Y axis direction. Roof portion 47 has a roof shape having a thickness in the Z axis direction and extending in the form of a strip along the upper end portion of plate portion 46.

The pair of binding bars 43 are disposed at both ends of the stack of battery cells 11 in the X axis direction. Each of binding bars 43 extends in the Y axis direction. An end portion of binding bar 43 in the -Y axis direction is connected to end plate 42P. An end portion of binding bar 43 in the +Y axis direction is connected to end plate 42Q. The pair of binding bars 43 and the pair of end plates 42 apply a restraint force in the Y axis direction onto the plurality of battery cells 11 (the plurality of battery cell units 21). It should be noted that a retainer may be further provided which extends in the X axis direction with the retainer intersecting a below-described duct 71 and which is connected to the pair of binding bars 43 at both end portions thereof.

Battery module 100 further has duct 71 and a cover body 51. Duct 71 is composed of a resin such as polybutylene terephthalate resin (PBT resin). Duct 71 extends in the Y axis direction with duct 71 facing the plurality of battery cells 11 (the plurality of battery cell units 21) in the Z axis direction. Duct 71 is an elongated body extending in the Y axis direction. Duct 71 forms a path through which gas discharged from each of the plurality of battery cells 11 flows. Duct 71 is attached to an attachment-target member 30. Attachment-target member 30 is a member held by battery cells 11, and, in the present embodiment, is constituted of the plurality of case bodies 31 arranged side by side in the Y axis direction.

Cover body 51 is composed of a resin. Cover body 51 is provided to cover the plurality of battery cells 11 in the Z axis direction. Cover body 51 is provided to face case top portions 32 of case bodies 31 in the Z axis direction. Cover body 51 is provided to further cover duct 71.

Next, a structure for attaching duct 71 to attachment-target member 30 (the plurality of case bodies 31) will be described in detail.

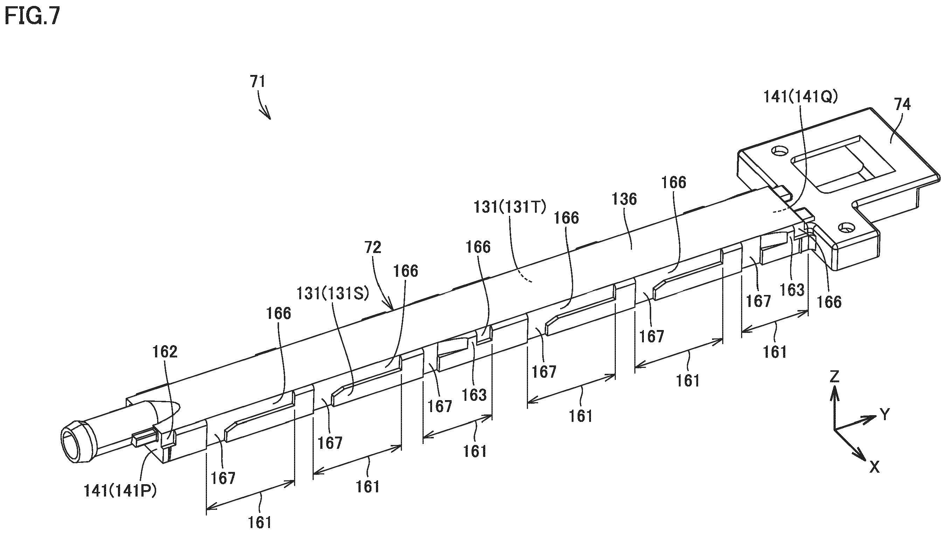

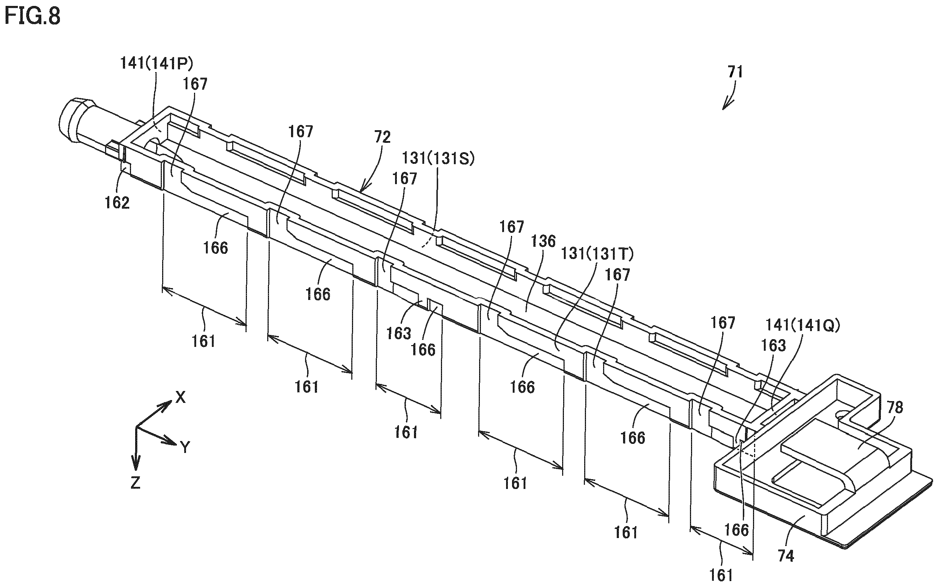

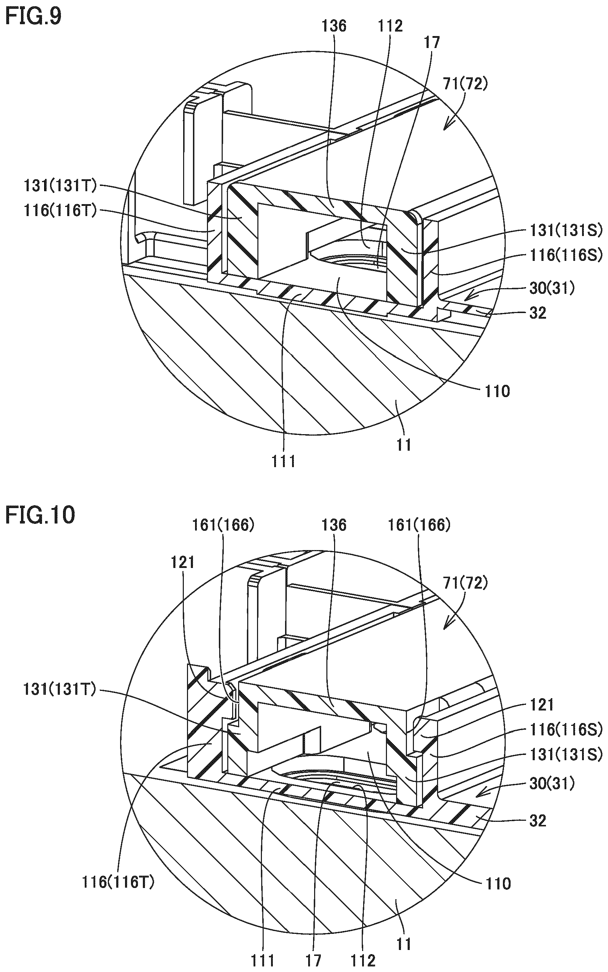

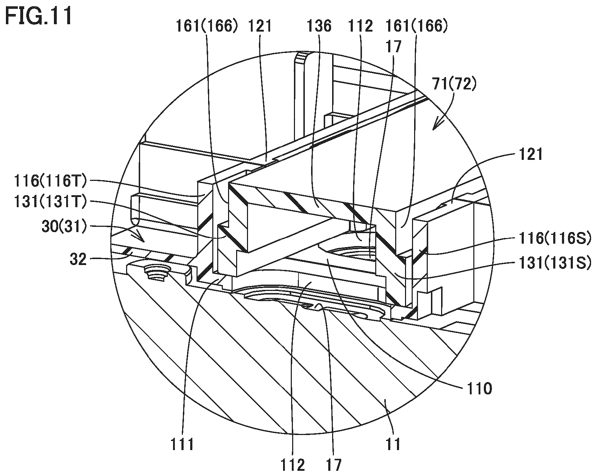

Each of Figs. 7 and 8 is a perspective view showing the duct. Fig. 9 is a cross sectional view showing the battery module (state in which the duct is attached to the attachment-target member) when viewed in a direction of arrow on a line IX-IX in Fig. 2. Fig. 10 is a cross sectional view showing the battery module (state in which the duct is attached to the attachment-target member) when viewed in a direction of arrow on a line X-X in Fig. 2. Fig. 11 is a cross sectional view showing the battery module (state in which the duct is attached to the attachment-target member) when viewed in a direction of an arrow on a line XI-XI in Fig. 2.

Referring to Figs. 4 and 5 as well as Figs. 9 to 11, attachment-target member 30 (the plurality of case bodies 31) has a floor wall portion 111 and a pair of vertical wall portions 116 (116S, 116T).

Floor wall portion 111 is constituted of a portion of case top portion 32 of each case body 31. Floor wall portion 111 is disposed in parallel with the X-Y axes plane. Floor wall portion 111 has a wall shape having a thickness in the Z axis direction and extending in the Y axis direction across the plurality of case bodies 31 arranged side by side in the Y axis direction. Floor wall portion 111 is disposed just above each of cell top surfaces 15 of battery cells 11 accommodated in case bodies 31. Floor wall portion 111 is disposed between positive electrode terminals 16p and negative electrode terminals 16n in the X axis direction. Floor wall portion 111 is provided with through holes 112 to expose gas-discharge valves 17.

The pair of vertical wall portions 116 rise from floor wall portion 111 in the +Z axis direction. An end portion (lower end portion) of each vertical wall portion 116 in the -Z axis direction is connected to floor wall portion 111. Vertical wall portion 116 has a wall shape having a thickness in the X axis direction and extending in the Y axis direction with an unchanged height in the Z axis direction across the plurality of case bodies 31 arranged side by side in the Y axis direction.

The pair of vertical wall portions 116 are provided with a space being interposed therebetween in the X axis direction. Vertical wall portion 116S is provided at a position away from vertical wall portion 116T in the +X axis direction. The pair of vertical wall portions 116 are provided at the center portions of case top portions 32 in the X axis direction. Through holes 112 are opened between vertical wall portion 116S and vertical wall portion 116T in the X axis direction. In a state in which duct 71 is not attached to attachment-target member 30, a space surrounded in three directions by floor wall portion 111, vertical wall portion 116S, and vertical wall portion 116T is opened in the +Z axis direction and the ±Y axis direction.

Referring to Figs. 2 and 3 as well as Figs. 7 to 11, duct 71 has a duct main body portion 72. Duct main body portion 72 forms a main part of duct 71 for allowing gas from each battery cell 11 to flow therethrough. Duct main body portion 72 extends in the Y axis direction with duct main body portion 72 facing, in the Z axis direction, the plurality of gas-discharge valves 17 arranged side by side with a space being interposed therebetween in the Y axis direction.

Duct 71 (duct main body portion 72) is disposed between the pair of vertical wall portions 116. Duct 71 (duct main body portion 72) and case bodies 31 form a flow space 110 for gas discharged from each battery cell 11.

As shown in Figs. 7 to 11, duct 71 (duct main body portion 72) has a duct top wall portion 136, a pair of duct side wall portions 131 (131S, 131T), and a pair of duct side wall portions 141 (141P, 141Q).

Duct top wall portion 136 is disposed in parallel with the X-Y axes plane. Duct top wall portion 136 has a wall shape having a thickness in the Z axis direction and extending in the Y axis direction with an unchanged width in the X axis direction. Duct top wall portion 136 faces floor wall portion 111 with flow space 110 being interposed therebetween in the Z axis direction. Flow space 110 is formed between duct top wall portion 136 and floor wall portion 111 in the Z axis direction.

The pair of duct side wall portions 131 extend, in the Z axis direction toward floor wall portion 111 (in the -Z axis direction), from both end portions of duct top wall portion 136 in the X axis direction. Each of duct side wall portions 131 has a wall shape having a thickness in the X axis direction and extending in the Y axis direction with an unchanged height in the Z axis direction. The pair of duct side wall portions 131 are provided with a space being interposed therebetween in the X axis direction. Duct side wall portion 131S is provided at a position away from duct side wall portion 131T in the +X axis direction. Flow space 110 is formed between duct side wall portion 131S and duct side wall portion 131T in the X axis direction.

Duct side wall portion 131S faces vertical wall portion 116S in the X axis direction. Duct side wall portion 131T faces vertical wall portion 116T in the X axis direction. A space is provided between duct side wall portion 131S and vertical wall portion 116S in the X axis direction. A space is provided between duct side wall portion 131T and vertical wall portion 116T in the X axis direction. The size of each of these spaces may be such a size that leakage of a small amount of gas from flow space 110 is permitted.

Each of duct side wall portions 141 (corresponding to the "fifth wall portion") is disposed in parallel with the X-Z axes plane. The pair of duct side wall portions 141 are provided with a space being interposed therebetween in the Y axis direction. The pair of duct side wall portions 141 are connected to both end portions of duct top wall portion 136 and both end portions of each of the pair of duct side wall portions 131 in the Y axis direction.

Duct side wall portion 141P is provided at a position away from duct side wall portion 141Q in the -Y axis direction. Flow space 110 is formed between duct side wall portion 141P and duct side wall portion 141Q in the Y axis direction. Duct side wall portion 141 has a wall shape having a thickness in the Y axis direction and extending in the X axis direction with an unchanged height in the Z axis direction.

According to such a configuration, since duct top wall portion 136 and the pair of duct side wall portions 131 of duct 71 are combined with floor wall portion 111 and the pair of vertical wall portions 116 of the plurality of case bodies 31 arranged side by side in the Y axis direction, it is possible to provide a beam structure extending in the Y axis direction with the beam structure facing the plurality of battery cells 11 in the Z axis direction. Thus, even when battery module 100 receives an excessive impact from the outside, for example, even when a collision occurs in the vehicle having battery module 100 mounted thereon, battery cells 11 can be appropriately protected from the impact. Further, since the high-rigidity beam structure is disposed just above the plurality of battery cells 11, the plurality of battery cells 11 can be prevented from jumping out in the Z axis direction.

Duct 71 (duct main body portion 72) further has the pair of duct side wall portions 141, and the pair of duct side wall portions 141 and the pair of duct side wall portions 131 form a frame body that surrounds flow space 110 in a plane parallel to the X-Y axes plane. With such a configuration, the rigidity of the beam structure formed by duct 71 and attachment-target member 30 (the plurality of case bodies 31) can be further increased.

Duct 71 (duct main body portion 72) extends in the Y axis direction to pass over the center position of each battery cell 11 in the X axis direction. According to this configuration, regardless of whether a direction of application of an impact to battery module 100 is the +X axis direction or the -X axis direction, these impacts can be received in an excellently balanced manner by the beam structure formed by duct 71 and attachment-target member 30.

Each wall portion of duct main body portion 72 (duct top wall portion 136, the pair of duct side wall portions 131 and the pair of duct side wall portions 141) preferably has a thickness of 2 mm or more. According to this configuration, the rigidity of the beam structure formed by duct 71 and attachment-target member 30 can be further increased.

Duct top wall portion 136 and the pair of duct side wall portions 131 are provided to extend across the plurality of battery cells 11 stacked in the Y axis direction. Duct top wall portion 136 and the pair of duct side wall portions 131 extend in the Y axis direction across the plurality of battery cell units 21 (21A to 21F) arranged side by side in the Y axis direction so as to face the plurality of battery cells 11 in the Z axis direction. According to such a configuration, the plurality of battery cells 11 can be more securely prevented from jumping out in the Z axis direction.

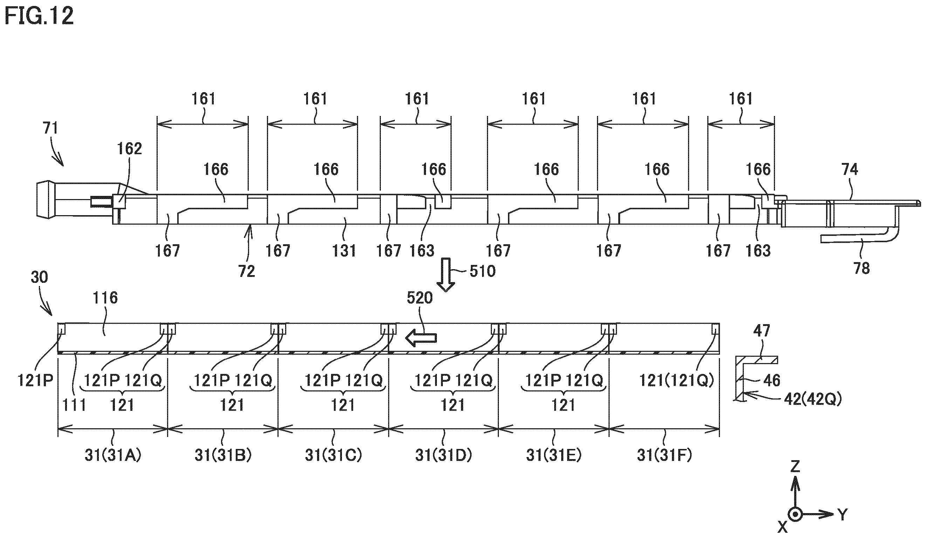

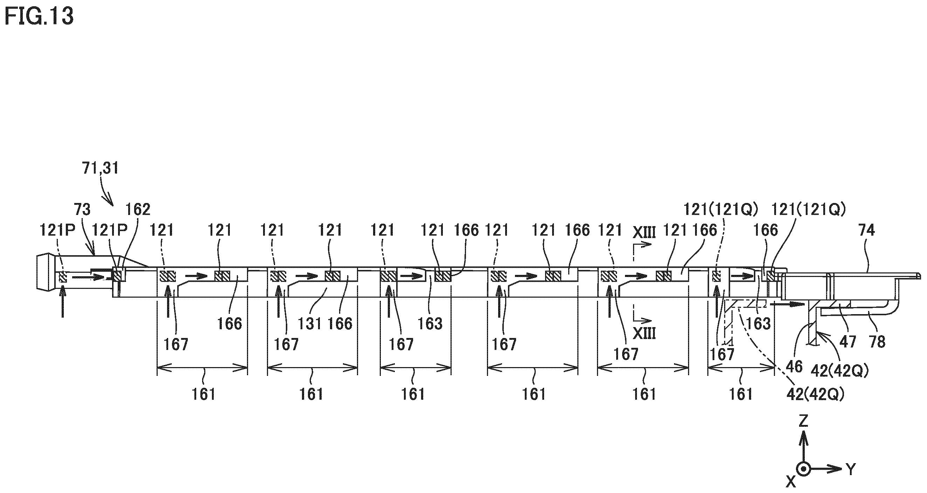

Each of Figs. 12 and 13 is a side view showing a step when attaching the duct to the attachment-target member. Referring to Figs. 4, 5, 10, and 12, each vertical wall portion 116 of attachment-target member 30 (the plurality of case bodies 31) has claw portions 121. Each of claw portions 121 has a protruding shape protruding in the X axis direction.

As shown in Fig. 10, claw portions 121 are provided in each of vertical wall portions 116, i.e., vertical wall portion 116S and vertical wall portion 116T. Each of claw portions 121 is provided in vertical wall portion 116S to protrude toward duct side wall portion 131S from the inner surface of vertical wall portion 116S facing duct side wall portion 131S in the X axis direction. Each of claw portions 121 is provided in vertical wall portion 116T to protrude toward duct side wall portion 131T from the inner surface of vertical wall portion 116T facing duct side wall portion 131T in the X axis direction.

Claw portions 121 are provided at the upper end portion of each vertical wall portion 116. The plurality of claw portions 121 are provided in each vertical wall portion 116 with a space being interposed therebetween in the Y axis direction. The plurality of claw portions 121 are provided such that claw portions 121 of vertical wall portion 116S and claw portions 121 of vertical wall portion 116T face each other in the X axis direction.

As shown in Fig. 5, in each case body 31 of attachment-target member 30, vertical wall portion 116 is provided with a first protrusion 121P and a second protrusion 121Q. First protrusion 121P and second protrusion 121Q are provided at both end portions of case body 31 in the Y axis direction. Each of first protrusion 121P and second protrusion 121Q has a protruding shape protruding in the X axis direction.

As shown in Figs. 4 and 12, when the plurality of case bodies 31 are arranged side by side in the Y axis direction, respective first protrusions 121P and second protrusions 121Q of adjacent case bodies 31 in the Y axis direction are connected together in the Y axis direction, thereby forming claw portions 121.

In Figs. 4 and 12, respective case bodies 31 of battery cell unit 21A, battery cell unit 21B, battery cell unit 21C, battery cell unit 21D, battery cell unit 21E, and battery cell unit 21F are shown as a case body 31A, a case body 31B, a case body 31C, a case body 31D, a case body 31E, and a case body 31F, respectively. For example, first protrusion 121P provided in case body 31C and second protrusion 121Q provided in case body 31D adjacent to case body 31C are connected to each other in the Y axis direction to form a claw portion 121.

On the other hand, at the end portion of vertical wall portion 116 in the -Y axis direction, first protrusion 121P provided in case body 31A is disposed solely. At the end portion of vertical wall portion 116 in the +Y axis direction, second protrusion 121Q provided in case body 31F is disposed solely to form a claw portion 121.

Referring to Figs. 7, 8, 10, and 12, groove portions 161 are formed in each duct side wall portion 131 of duct 71. Each of groove portions 161 has a recessed shape recessed in the X axis direction.

As shown in Fig. 10, groove portions 161 are provided in each of duct side wall portions 131, i.e., duct side wall portion 131S and duct side wall portion 131T. Duct side wall portion 131S is provided with groove portions 161 each recessed from the outer surface of duct side wall portion 131S facing vertical wall portion 116S in the X axis direction so as to be separated away from vertical wall portion 116S. Duct side wall portion 131T is provided with groove portions 161 each recessed from the outer surface of duct side wall portion 131T facing vertical wall portion 116T in the X axis direction so as to be separated away from vertical wall portion 116T.

The plurality of groove portions 161 are formed in each duct side wall portion 131 with a space being interposed therebetween in the Y axis direction. The plurality of groove portions 161 are provided such that groove portions 161 of duct side wall portion 131S and groove portions 161 of duct side wall portion 131T face each other in the X axis direction. The plurality of groove portions 161 are provided to respectively correspond to the plurality of claw portions 121 provided in vertical wall portion 116. With such a configuration, respective sets of claw portions 121 and groove portions 161 are provided at a plurality of positions with a space being interposed therebetween in the Y axis direction.

Each of duct side wall portions 131 (131S, 131T) is further provided with a groove portion 162. Groove portion 162 is provided at the end portion of duct side wall portion 131 in the -Y axis direction. The recessed shape of groove portion 162 is opened in the +Z axis direction and the -Y axis direction.

Each of groove portions 161 has a first segment portion 166 and a second segment portion 167. First segment portion 166 extends in the Y axis direction. In a state in which duct 71 is attached to attachment-target member 30 (the plurality of case bodies 31), claw portion 121 is disposed in first segment portion 166. First segment portion 166 anchors claw portion 121 in the Z axis direction.

First segment portion 166 extends in the Y axis direction along the end portion (upper end portion) of duct side wall portion 131 in the +Z axis direction. First segment portion 166 has a recessed shape forming a step in the X axis direction with respect to the outer surface of duct side wall portion 131 at its end portion in the -Z axis direction and extending in the Y axis direction as its longitudinal direction.

Second segment portion 167 extends in a direction intersecting the Y axis direction and is connected to first segment portion 166. Second segment portion 167 extends in the Z axis direction orthogonal to the Y axis direction. Second segment portion 167 has a recessed shape forming steps with respect to the outer surface of duct side wall portion 131 at its both end portions in the Y axis direction and extending in the Z axis direction as its longitudinal direction. The end portion (upper end portion) of second segment portion 167 in the +Z axis direction and the end portion of first segment portion 166 in the -Y axis direction are connected to each other. First segment portion 166 extends in the +Y axis direction from a position at which first segment portion 166 and second segment portion 167 are connected to each other. Second segment portion 167 allows claw portion 121 to enter first segment portion 166 when attaching duct 71 to attachment-target member 30.

The length of first segment portion 166 in the Y axis direction is preferably 1/2 or less, more preferably 1/4 or less, and further preferably 1/6 or less of the total length of duct side wall portion 131 in the Y axis direction.

Duct side wall portion 131 has a stepped portion 163. Stepped portion 163 is provided in at least one groove portion 161 of the plurality of groove portions 161.

Stepped portion 163 is provided on a path of first segment portion 166. Stepped portion 163 is provided between the end portion of first segment portion 166 in the +Y axis direction and the end portion of first segment portion 166 in the -Y axis direction. Stepped portion 163 has a stepped shape rising from the bottom surface of groove portion 161. More specifically, based on the bottom surface of groove portion 161 as a reference, stepped portion 163 is constituted of: a top surface having the same height as the outer surface of duct side wall portion 131 in the X axis direction; an inclined surface extending obliquely with respect to the Y-X axes plane between the end portion of the top surface in the -Y axis direction and the bottom surface of groove portion 161; and a right-angled surface extending in parallel with the X-Z axes plane between the end portion of the top surface in the +Y axis direction and the bottom surface of groove portion 161.

In a state in which duct 71 is attached to attachment-target member 30, claw portion 121 is disposed opposite to second segment portion 167 with stepped portion 163 being interposed therebetween on the path of first segment portion 166. Claw portion 121 is disposed between the end portion of first segment portion 166 in the +Y axis direction and stepped portion 163.

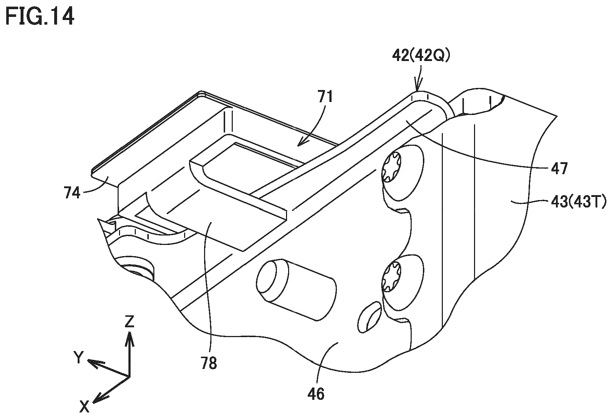

Fig. 14 is a perspective view showing the battery module when viewed in a direction indicated by an arrow XIV in Fig. 3. Referring to Figs. 7, 8, and 14, duct 71 further has a duct extension portion 74 and a clip portion 78.

Duct extension portion 74 extends in the +Y axis direction from the end portion of duct main body portion 72 in the +Y axis direction. Duct extension portion 74 has a shape of plate disposed in parallel with the X-Y axes plane.

Clip portion 78 extends in the -Y axis direction from duct extension portion 74. Clip portion 78 has a bar shape having a thickness in the Z axis direction and extending in the Y axis direction with an unchanged width in the X axis direction. An end portion of clip portion 78 in the +Y axis direction is connected to duct extension portion 74. Clip portion 78 is elastically deformable such that the end portion of clip portion 78 in the -Y axis direction is displaced along the Z axis direction with respect to a position connected to duct extension portion 74.

As shown in Fig. 14, in a state in which duct 71 is attached to attachment-target member 30, clip portion 78 and duct extension portion 74 sandwich end plate 42Q in the Z axis direction. Roof portion 47 of end plate 42Q is sandwiched between duct extension portion 74 and clip portion 78 in the Z axis direction.

Referring to Figs. 12 and 13, when attaching duct 71 to attachment-target member 30, duct 71 is first disposed to face attachment-target member 30 such that the plurality of claw portions 121 respectively face second segment portions 167 of the plurality of groove portions 161 in the Z axis direction.

Next, duct 71 is slid in the -Z axis direction indicated by an arrow 510 in Fig. 12 and is accordingly disposed between the pair of vertical wall portions 116 (116S, 116T). On this occasion, each of the plurality of claw portions 121 enters a corresponding one of the plurality of second segment portions 167, and is moved through second segment portion 167 to the position at which first segment portion 166 and second segment portion 167 are connected to each other (position at which claw portion 121 is indicated by a chain double-dashed line in Fig. 13). Further, first protrusion 121P provided in case body 31A is positioned to face groove portion 162 in the Y axis direction, and roof portion 47 of end plate 42Q is positioned to face a space between clip portion 78 and duct extension portion 74 in the Y axis direction.

Next, duct 71 is slid in the -Y axis direction indicated by an arrow 520 in Fig. 12. On this occasion, each of the plurality of claw portions 121 is moved through first segment portion 166 to a position away in the +Y axis direction from the position at which first segment portion 166 and second segment portion 167 are connected to each other. Further, in groove portion 161 provided with stepped portion 163, claw portion 121 climbs over stepped portion 163 during the movement in first segment portion 166. Claw portion 121 disposed in first segment portion 166 is brought into abutment with the stepped portion in the X axis direction as formed by first segment portion 166 and the outer surface of duct side wall portion 131, and is accordingly anchored in the Z axis direction.

First protrusion 121P provided in case body 31A is disposed in groove portion 162. First protrusion 121P disposed in groove portion 162 is brought into abutment with the stepped portion in the X axis direction as formed by groove portion 162 and the outer surface of duct side wall portion 131, and is accordingly anchored in the Z axis direction. Roof portion 47 of end plate 42Q is inserted between clip portion 78 and duct extension portion 74.

With the above steps, the operation of attaching duct 71 to attachment-target member 30 is completed. It should be noted that when detaching duct 71 from attachment-target member 30, the above steps may be performed in the reverse order.

The structure of battery module 100 according to the embodiment of the present invention described above is summarized as follows. Battery module 100 according to the present embodiment includes: the plurality of battery cells 11 stacked in the Y axis direction (first direction); duct 71 extending in the Y axis direction with duct 71 facing the plurality of battery cells 11 in the Z axis direction (second direction) orthogonal to the Y axis direction, so as to form a flow space 110 for gas discharged from each of the plurality of battery cells 11; and attachment-target member 30 to which duct 71 is attached, attachment-target member 30 being held by battery cells 11.

Attachment-target member 30 has floor wall portion 111 serving as a first wall portion and disposed in parallel with the X-Y axes plane orthogonal to the Z axis direction, and the pair of vertical wall portions 116 serving as second wall portions and each rising from the floor wall portion 111 in the Z axis direction, the pair of vertical wall portions 116 being provided with a space being interposed between the pair of vertical wall portions 116 in the X axis direction (third direction) orthogonal to the Y axis direction and the Z axis direction. Duct 71 is disposed between the pair of vertical wall portions 116. Duct 71 has: duct top wall portion 136 serving as a third wall portion and disposed in parallel with the X-Y axes plane orthogonal to the Z axis direction, duct top wall portion 136 facing floor wall portion 111 in the Z axis direction with flow space 110 being interposed between duct top wall portion 136 and floor wall portion 111; and the pair of duct side wall portions 131 serving as fourth wall portions and extending, in the Z axis direction toward floor wall portion 111, from the both end portions of duct top wall portion 136 in the X axis direction, the pair of duct side wall portions 131 respectively facing the pair of vertical wall portions 116 in the X axis direction.

According to battery module 100 of the embodiment of the present invention thus configured, the high-rigidity beam structure extending in the stacking direction of battery cells 11 can be provided by floor wall portion 111 and the pair of vertical wall portions 116 of attachment-target member 30 and duct top wall portion 136 and the pair of duct side wall portions 131 of duct 71, with the result that battery cells 11 can be appropriately protected from an impact from the outside.

In the present embodiment, it has been described that the attachment-target member in the present invention is constituted of the plurality of case bodies 31 that each accommodate battery cells 11; however, the present invention is not limited thereto. The first wall portion and the pair of second wall portions in the present invention may be provided in one piece with a separator interposed between the battery cells stacked in the Y axis direction, for example.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery module comprising:
a plurality of battery cell units (21) arranged side by side in a first direction,
wherein each of the battery cell units includes a plurality of battery cells (11) stacked in the first direction, the plurality of the battery cells (11) being arranged side by side continuously in the first direction;
a duct (71) extending in the first direction with the duct (71) facing the plurality of battery cells (11) in a second direction orthogonal to the first direction, so as to form a flow space (110) for gas discharged from each of the plurality of battery cells (11); and
an attachment-target member (30) to which the duct (71) is attached, the attachment-target member (30) being held by the battery cells (11), wherein
the attachment-target member (30) has
a first wall portion (111) disposed in parallel with a plane orthogonal to the second direction, and
a pair of second wall portions (116) each rising from the first wall portion (111) in the second direction, the pair of second wall portions (116) being provided with a space being interposed between the pair of second wall portions (116) in a third direction orthogonal to the first direction and the second direction,
the duct (71) is disposed between the pair of second wall portions (116), and
the duct (71) has
a third wall portion (136) disposed in parallel with the plane orthogonal to the second direction, the third wall portion (136) facing the first wall portion (111) in the second direction with the flow space (110) being interposed between the third wall portion (136) and the first wall portion (111),
a pair of fourth wall portions (131) extending, in the second direction toward the first wall portion (111), from both end portions of the third wall portion (136) in the third direction, the pair of fourth wall portions (131) respectively facing the pair of second wall portions (116) in the third direction; and
each second wall portion (116) has a wall shape having a thickness in the third direction and extending in the first direction with a height in the second direction greater than the thickness
**characterized by further comprising**
a case body (31) that accommodates the plurality of the battery cells (11) arranged side by side continuously in the first direction;
**and in that**
the attachment-target member (30) is constituted of a plurality of the case bodies (31).

2. The battery module according to claim 1, wherein the duct (71) extends in the first direction to pass over a center position of each of the battery cells (11) in the third direction.

3. The battery module according to claim 1 or 2, wherein each of the third wall portion (136) and the pair of fourth wall portions (131) has a thickness of 2 mm or more.

4. The battery module according to any one of claims 1 to 3, wherein the duct (71) further has a pair of fifth wall portions (141) disposed in parallel with a plane orthogonal to the first direction, the pair of fifth wall portions (141) being provided with a space being interposed between the pair of fifth wall portions (141) in the first direction, the pair of fifth wall portions (141) being connected to both end portions of the third wall portion (136) and both end portions of each of the pair of fourth wall portions (131) in the first direction.

5. The battery module according to any one of claims 1 to 4, wherein the third wall portion (136) and the pair of fourth wall portions (131) are provided to extend across the plurality of battery cells (11) stacked in the first direction.

## Patentansprüche

1. Batteriemodul, aufweisend:
eine Mehrzahl von Batteriezelleinheiten (21), die in einer ersten Richtung nebeneinander angeordnet sind, wobei jede von den Batteriezelleinheiten eine Mehrzahl von Batteriezellen (11) umfasst, die in der ersten Richtung gestapelt sind, wobei die Mehrzahl von Batteriezellen (11) in der ersten Richtung kontinuierlich nebeneinander angeordnet ist;
einen Kanal (71), der sich in der ersten Richtung erstreckt, wobei der Kanal (71) in einer zweiten Richtung orthogonal zu der ersten Richtung auf die Mehrzahl von Batteriezellen (11) gerichtet ist, um einen Strömungsraum (110) für ein aus jeder von der Mehrzahl von Batteriezellen (11) abgeführtes Gas zu bilden; und
ein Befestigungszielelement (30), an dem der Kanal (71) befestigt ist, wobei das Befestigungszielelement (30) durch die Batteriezellen (11) gehalten wird, wobei das Befestigungszielelement (30)
einen ersten Wandabschnitt (111) aufweist, der parallel zu einer Ebene orthogonal zu der zweiten Richtung angeordnet ist, und
ein Paar von zweiten Wandabschnitten (116) aufweist, die jeweils von dem ersten Wandabschnitt (111) in der zweiten Richtung aufragen, wobei das Paar von zweiten Wandabschnitten (116) mit einem Raum versehen ist, der zwischen dem Paar von zweiten Wandabschnitten (116) in einer dritten Richtung orthogonal zu der ersten Richtung und der zweiten Richtung angeordnet ist,
der Kanal (71) zwischen dem Paar von zweiten Wandabschnitten (116) angeordnet ist, und
der Kanal (71)
einen dritten Wandabschnitt (136) aufweist, der parallel zu der Ebene orthogonal zu der zweiten Richtung angeordnet ist, wobei der dritte Wandabschnitt (136) in der zweiten Richtung dem ersten Wandabschnitt (111) zugewandt ist, wobei der Strömungsraum (110) zwischen dem dritten Wandabschnitt (136) und dem ersten Wandabschnitt (111) angeordnet ist,
ein Paar von vierten Wandabschnitten (131) aufweist, die sich in der zweiten Richtung zu dem ersten Wandabschnitt (111) hin von beiden Endabschnitten des dritten Wandabschnitts (136) in der dritten Richtung erstrecken, wobei das Paar von vierten Wandabschnitten (131) jeweils dem Paar von zweiten Wandabschnitten (116) in der dritten Richtung zugewandt ist; und
wobei jeder zweite Wandabschnitt (116) eine Wandform mit einer Dicke in der dritten Richtung aufweist, die sich in der ersten Richtung mit einer Höhe in der zweiten Richtung erstreckt, die größer ist als die Dicke,
**dadurch gekennzeichnet, dass** es weiterhin aufweist:
einen Gehäusekörper (31), der die Mehrzahl von Batteriezellen (11) aufnimmt, die in der ersten Richtung kontinuierlich nebeneinander angeordnet sind;
und dadurch, dass
das Befestigungszielelement (30) aus einer Mehrzahl von Gehäusekörpern (31) besteht.

2. Batteriemodul nach Anspruch 1, wobei sich der Kanal (71) in der ersten Richtung so erstreckt, dass er über eine Mittelposition von jeder der Batteriezellen (11) in der dritten Richtung verläuft.

3. Batteriemodul nach Anspruch 1 oder 2, wobei jeder von den dritten Wandabschnitten (136) und dem Paar von vierten Wandabschnitten (131) eine Dicke von 2 mm oder mehr aufweist.

4. Batteriemodul nach einem der Ansprüche 1 bis 3, wobei der Kanal (71) ferner ein Paar von fünften Wandabschnitten (141) aufweist, die parallel zu einer Ebene orthogonal zu der ersten Richtung angeordnet sind, wobei das Paar von fünften Wandabschnitten (141) mit einem Raum versehen ist, der zwischen dem Paar von fünften Wandabschnitten (141) in der ersten Richtung angeordnet ist, wobei das Paar von fünften Wandabschnitten (141) mit beiden Endabschnitten des dritten Wandabschnitts (136) und beiden Endabschnitten eines jeden des Paares von vierten Wandabschnitten (131) in der ersten Richtung verbunden ist.

5. Batteriemodul nach einem der Ansprüche 1 bis 4, wobei der dritte Wandabschnitt (136) und das Paar von vierten Wandabschnitten (131) so angeordnet sind, dass sie sich über die Mehrzahl von in der ersten Richtung gestapelten Batteriezellen (11) erstrecken.

## Revendications

1. Un module de batterie comprenant :
une pluralité d'unités de cellules de batterie (21) disposées côte à côte dans une première direction, dans lequel chacune des unités de cellules de batterie comprend une pluralité de cellules de batterie (11) empilées dans la première direction, la pluralité de cellules de batterie (11) étant disposées côte à côte de manière continue dans la première direction ;
un conduit (71) s'étendant dans la première direction, le conduit (71) faisant face à la pluralité de cellules de batterie (11) dans une deuxième direction orthogonale à la première direction, de manière à former un espace d'écoulement (110) pour le gaz évacué de chacune de la pluralité de cellules de batterie (11) ; et
un élément cible de fixation (30) auquel le conduit (71) est fixé, l'élément cible de fixation (30) étant maintenu par les cellules de batterie (11), dans lequel
l'élément cible de fixation (30) comporte
une première partie de paroi (111) disposée parallèlement à un plan orthogonal à la deuxième direction, et
une paire de deuxièmes parties de paroi (116) s'élevant chacune à partir de la première partie de paroi (111) dans la deuxième direction, la paire de deuxièmes parties de paroi (116) étant pourvue d'un espace intercalé entre la paire de deuxièmes parties de paroi (116) dans une troisième direction orthogonale à la première direction et à la deuxième direction,
le conduit (71) est disposé entre la paire de deuxièmes parties de paroi (116), et
le conduit (71) comporte
une troisième partie de paroi (136) disposée parallèlement au plan orthogonal à la deuxième direction, la troisième partie de paroi (136) faisant face à la première partie de paroi (111) dans la deuxième direction, l'espace d'écoulement (110) étant intercalé entre la troisième partie de paroi (136) et la première partie de paroi (111),
une paire de quatrièmes parties de paroi (131) s'étendant, dans la deuxième direction vers la première partie de paroi (111), à partir des deux parties d'extrémité de la troisième partie de paroi (136) dans la troisième direction, la paire de quatrièmes parties de paroi (131) faisant respectivement face à la paire de deuxièmes parties de paroi (116) dans la troisième direction ; et
chaque deuxième partie de paroi (116) a une forme de paroi ayant une épaisseur dans la troisième direction et s'étendant dans la première direction avec une hauteur dans la deuxième direction supérieure à l'épaisseur
**caractérisé en ce qu'**il comprend en outre
un corps de boîtier (31) qui loge la pluralité de cellules de batterie (11) disposées côte à côte de manière continue dans la première direction ;
et **en ce que**
l'élément cible de fixation (30) est constitué d'une pluralité de corps de boîtier (31).

2. Le module de batterie selon la revendication 1, dans lequel le conduit (71) s'étend dans la première direction pour passer au-dessus d'une position centrale de chacune des cellules de batterie (11) dans la troisième direction.

3. Le module de batterie selon la revendication 1 ou 2, dans lequel chacune de la troisième partie de paroi (136) et de la paire de quatrièmes parties de paroi (131) a une épaisseur de 2 mm ou plus.

4. Le module de batterie selon l'une des revendications 1 à 3, dans lequel le conduit (71) comporte en outre une paire de cinquièmes parties de paroi (141) disposées parallèlement à un plan orthogonal à la première direction, la paire de cinquièmes parties de paroi (141) étant pourvue d'un espace interposé entre la paire de cinquièmes parties de paroi (141) dans la première direction, la paire de cinquièmes parties de paroi (141) étant reliée aux deux parties d'extrémité de la troisième partie de paroi (136) et aux deux parties d'extrémité de chacune de la paire de quatrièmes parties de paroi (131) dans la première direction.

5. Le module de batterie selon l'une des revendications 1 à 4, dans lequel la troisième partie de paroi (136) et la paire de quatrièmes parties de paroi (131) sont prévues pour s'étendre à travers la pluralité de cellules de batterie (11) empilées dans la première direction.
